# EUROPEAN PATENT APPLICATION

(11) **EP 4 761 237 A1**
(43) Date of publication of application: **17.06.2026**
(21) Application number: 24852279.9
(22) Date of filing: 06.08.2024
(51) Int. Cl.: H04N 13/327, H04N 13/344, H04N 13/324, G02B 27/00, G02B 27/01

(54) **DISPLAY DEVICE FOR DISPLAYING IMAGE USING LENS AND CONTROL METHOD THEREFOR**

(30) Priority: 10.08.2023 KR 20230104769
(71) Applicant: LX Semicon Co., Ltd., Daejeon 34027 (KR)
(72) Inventor: JEONG, Seok Hwa, Daejeon 34027 (KR); YUK, Ji Hong, Daejeon 34027 (KR); LEE, Do Hoon, Daejeon 34027 (KR); JEON, Ho Hyub, Daejeon 34027 (KR); CHOI, Ji Hoon, Daejeon 34027 (KR)
(74) Representative: Ter Meer Steinmeister & Partner
(86) International application number: PCT/KR2024/011579
(87) International publication number: WO 2025/033925

(57) **Abstract**

A control method for a display device for displaying an image using a lens, according to one embodiment of the present invention, comprises the steps of: receiving image data; before projecting to a lens, correcting the received image data differently for each pixel by referring to a memory, and outputting the corrected image data.

## Description

### TECHNICAL FIELD

The present invention is applicable to various devices that provide VR (virtual reality) services. For example, the present invention can be applied to head mounted displays (HMDs), smart glasses, mobile phones, PCs, and the like.

### BACKGROUND ART

Various VR devices, such as HMDs, have recently appeared on the market. However, users wearing these devices experience chromatic aberration because they view image data through lenses.

Chromatic aberration refers to the phenomenon in which light has different refractive indices depending on its wavelength, causing light passing through a lens to focus at different points for each color.

The refractive properties of light are such that the refractive index increases with shorter wavelengths and decreases with longer wavelengths. When chromatic aberration occurs due to this phenomenon, it causes color distortion mainly in the outer regions of the image.

To address such issues, conventional techniques have relied solely on scaling methods for chromatic aberration correction.

However, when only a scaling technique is used for chromatic aberration correction, deformation in the edge region of the image is not expressed uniformly, and as a result, chromatic aberration still remains.

### DISCLOSURE

### TECHNICAL PROBLEM

One embodiment of the present invention provides a novel compensation algorithm that minimizes chromatic aberration occurring in an edge region due to lens distortion in a device that provides images to a user through a special lens.

More specifically, in order to improve the performance of CAC (Chromatic Aberration Correction), for example, the present invention additionally compensates for image edges through pre-processing and post-processing procedures for lens distortion correction of each channel according to on lens distortion.

### TECHNICAL SOLUTION

To achieve the above-described objectives, a control method for a display device for displaying an image using a lens, according to one embodiment of the present invention, includes: receiving image data; additionally performing per-pixel pre-processing and post-processing for chromatic aberration correction by referring to a memory on the image data before the image data is projected onto the lens; and outputting the image data on which the per-pixel pre-processing and post-processing have been additionally performed.

The additionally performing per-pixel pre-processing and post-processing for chromatic aberration correction includes performing the chromatic aberration correction in different orders for each pixel, for example.

The image data includes at least one of image data for red pixels, image data for green pixels, or image data for blue pixels.

The image data for green pixels is bypassed without undergoing the chromatic aberration correction.

Further, for the image data for red pixels, the chromatic aberration correction is performed in the order of pre-processing, up-scaling, and post-processing by referring to the memory.

The pre-processing corresponds to, e.g., de-convolution, and the post-processing corresponds to, e.g., convolution.

Meanwhile, for the image data for blue pixels, the chromatic aberration correction is performed in the order of pre-processing, down-scaling, and post-processing by referring to the memory.

The pre-processing corresponds to, e.g., convolution, and the post-processing corresponds to, e.g., de-convolution.

The chromatic aberration correction is performed only on an edge region of the image data, for example.

The edge region may include a location where RGB values change abruptly beyond a preset threshold.

In addition, the control method for a display device for displaying an image using a lens, according to one embodiment of the present invention, further includes performing a multiplication operation on a variable k that varies according to a refractive index of the lens during the post-processing of red pixels or blue pixels, before outputting the image data.

A head mounted display (HMD) device, according to one embodiment of the present invention, includes a strap configured to be secured to a user's body, at least one lens, a memory, and a controller.

In particular, the controller receives image data, additionally performs per-pixel pre-processing and post-processing for chromatic aberration correction by referring to the memory on the image data before the image data is projected onto the at least one lens; and outputs the image data on which the per-pixel pre-processing and post-processing have been additionally performed.

A display device for displaying an image using a lens, according to one embodiment of the present invention, includes a display, and a controller.

In particular, the controller receives image data, additionally perform per-pixel pre-processing and post-processing for chromatic aberration correction on the image data before the image data is projected onto the lens, and controls the display to output the corrected image data.

### EFFECT OF THE INVENTION

According to one embodiment of the present invention, in a device that provides an image to a user through a special lens, chromatic aberration occurring in the edge region due to lens distortion can be minimized.

More specifically, for example, in order to improve the performance of CAC, the edges of the image are additionally compensated through pre-processing and post-processing procedures for lens distortion correction of each channel according to lens distortion.

Accordingly, there is a technical effect in that customer satisfaction related to chromatic aberration can also be improved.

In addition to the aforementioned technical effects, effects that would be apparent to those skilled in the art upon consideration of the entire specification are also included as additional technical effects of the present invention.

### BRIEF DESCRIPTION OF THE DRAWINGS

FIG. 1 exemplarily illustrate various exterior appearances of XR devices to which one embodiment of the present invention may be applied.
FIG. 2 illustrates perspective views of the HMD device shown in FIG. 1 from various angles.
FIG. 3 is a block diagram illustrating major internal components included in the HMD device shown in FIG. 1.
FIG. 4 exemplarily illustrates a silicon semiconductor substrate including a driving circuit included in the HMD device shown in FIG. 1.
FIG. 5 is a block diagram of a device providing a VR (Virtual Reality) service according to one embodiment of the present invention.
FIG. 6 illustrate a process in which pre-processing and post-processing are additionally performed in a CAC module according to one embodiment of the present invention.
FIG. 7 illustrate the overall process of CAC processing by comparing one embodiment of the present invention with a conventional technique.
FIG. 8 illustrates a more detailed process of pre-processing and post-processing for red pixel data according to one embodiment of the present invention.
FIG. 9 are diagrams for explaining video data of the edge region before and after passing through a lens, comparing one embodiment of the present invention with the conventional technique.
FIG. 10 is a flowchart of a method for providing a VR (Virtual Reality) service according to another embodiment of the present invention.

### MODE FOR CARRYING OUT THE INVENTION

Throughout the specification, the same reference numerals refer to substantially the same components. In the following description, detailed descriptions of configurations and features known in the art may be omitted if they are not relevant to the core configuration of the present disclosure. Terms used in this specification should be understood as follows.

The advantages and features of the present disclosure, and methods of achieving them will be apparent from the embodiments described in detail below in conjunction with the accompanying drawings. However, the present disclosure is not limited to the following embodiments, but may be implemented in various different forms; rather, the present embodiments are provided to make the description of the present disclosure complete and to allow those skilled in the art to fully understand the scope of the present disclosure, and the present disclosure is defined only within the scope of the appended claims.

The shapes, sizes, proportions, angles, numbers and the like shown in the accompanying drawings for the purpose of illustrating the embodiments of the present disclosure are merely examples, and the present disclosure is not limited thereto. Identical reference numerals designate identical components throughout the description. Further, in describing the present disclosure, detailed descriptions of related known technologies may be omitted so as not to obscure the essence of the present specification.

The terms such as "comprising," "including," "having," and "consisting of' used herein are generally intended to allow other components to be added unless the terms are used with the term "only." References to components of a singular noun include the plural of that noun, unless specifically stated otherwise.

In the interpretation of components, they are construed to include margins of error, even if not explicitly stated.

When describing a positional relationship, for example, "on," "above," "below," or "next to" describes the positional relationship of two parts, one or more other parts may be located between the two parts, unless "immediately" or "directly" is used.

When describing a temporal contextual relationship is described, for example, such as "after," "following," "next to," or "before," it may also include non-contiguous cases unless "immediately" or "directly" is used.

The first, the second, and so on are used to describe various components, but these components are not limited by these terms. These terms are used only to distinguish one component from another. Therefore, the first component referred to herein may also be a second component within the technical idea of the present disclosure.

The terms "the X-axis direction," "the Y-axis direction," and "the Z-axis direction" are not to be interpreted solely as a geometric relationship in which the relationship to one another is perpendicular, but may refer to a broader range of orientations in which the configurations of the present disclosure may function.

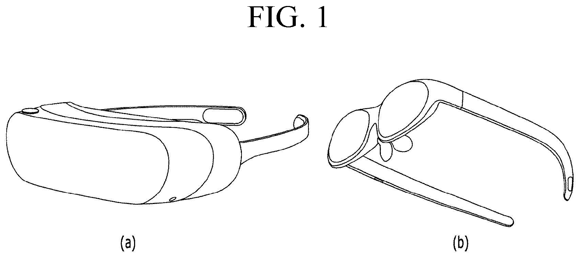

FIG. 1 illustrates various appearances of XR devices to which one embodiment of the present invention may be applied.

Virtual reality (VR) refers to a technology that uses virtual images, for example, for objects, backgrounds, and environments, rather than real ones. A representative product used in VR technology is a head mounted display (HMD) device. When an HMD device is worn on the head, small displays are positioned close to both eyes, projecting three-dimensional (3D) images using binocular disparity. Through a gyro sensor that tracks the user's movements and a rendering function that generates images according to the movements, the user can experience the feeling of being in a 3D space. (a) of FIG. 1 illustrates the external appearance of an HMD device as an example.

Augmented reality (AR) refers to a technology that, for example, overlays three-dimensional virtual images onto real-world images or backgrounds and displays them as a single image. A representative product used in AR technology is AR glasses. These are eyeglass-type electronic devices that display AR content on transparent lenses. When a user wears the AR glasses like ordinary glasses, they can display a large screen-like display in front of the user's eyes or provide various AR contents. The user can experience an expanded reality experience that combines AR content by utilizing all surrounding spaces 360 degrees around the user. (b) of FIG. 1 illustrates the external appearance of AR glasses as an example.

Mixed reality (MR) encompasses the concepts of augmented reality (AR), which adds virtual information to the real world, and augmented virtuality (AV), which adds real-world information to a virtual environment. In other words, it provides a smart environment where reality and virtuality are naturally connected, enabling users to enjoy rich experiences.

Extended reality (XR) refers to hyper-realistic technologies and services that encompass mixed reality (MR) technologies, including virtual reality (VR) and augmented reality (AR).

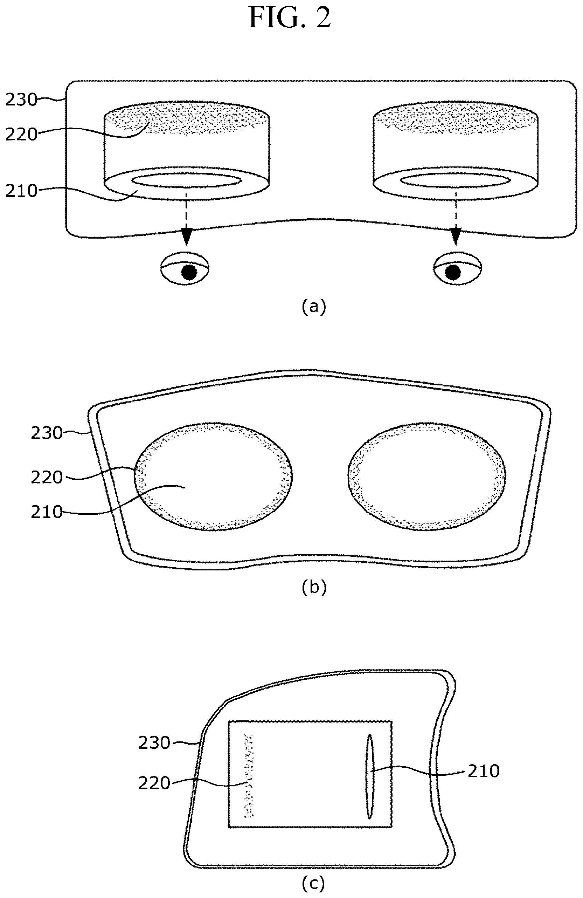

Hereinafter, in FIGS. 2 to 4, an HMD device using VR technology will be described as an example for convenience of explanation; however, the present invention is applicable to any type of XR device.

FIG. 2 illustrates perspective views of the HMD device shown in FIG. 1 from various angles.

(a) of FIG. 2 is a top perspective view of the HMD device according to one embodiment of the present invention. Reference numeral 210 denotes a lens, and two lenses are provided for the left and right eyes, respectively.

Reference numeral 220 denotes a display. Two displays may be provided to display images for the left eye and the right eye, respectively, or the device may be manufactured with a single display, which also falls within the scope of the present invention.

Further, reference numeral 230 denotes an HMD device (other types of VR devices also fall within the scope of the present invention).

(b) of FIG. 2 is a front perspective view of the HMD device according to one embodiment of the present invention, and (c) of FIG. 2 is a side perspective view of the HMD device according to one embodiment of the present invention.

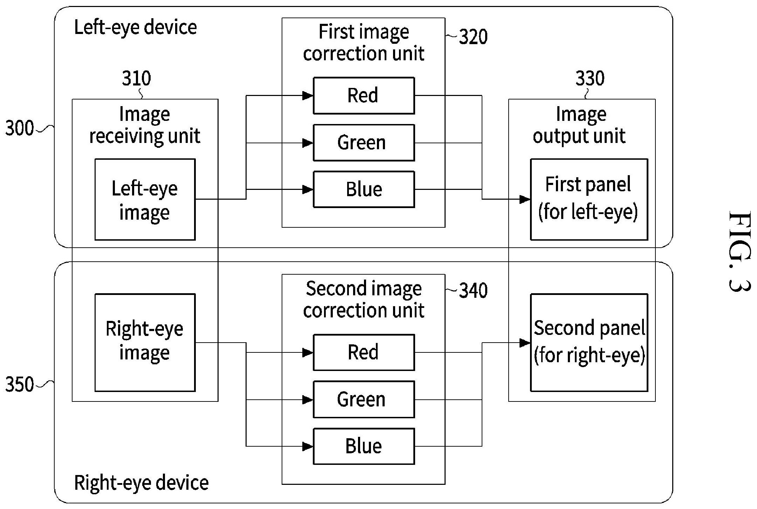

FIG. 3 is a block diagram illustrating the main internal components included in the HMD device shown in FIG. 1.

As illustrated in FIG. 3, an image receiving unit 310 included in a left-eye device 300 and an image receiving unit 310 included in a right-eye device 350 receive a left-eye image and a right-eye image, respectively.

This is due to characteristics of human visual perception, in which an object should be viewed from different perspectives depending on the positions of the two eyes so that the images perceived by both eyes can be combined in the brain and recognized as a single image. Accordingly, the HMD device is designed to receive the images corresponding to the left eye and the right eye, respectively.

A first image correction unit 320 included in the left-eye device 300 and a second image correction unit 340 included in the right-eye device 350 independently process the received image for R, G, and B, and then transmit the processed images to left-eye and right-eye panels included in an image output unit 330, respectively.

The images transmitted to the left-eye device 300 and the right-eye device 350 are generated by an application processor (AP).

Meanwhile, while FIG. 3 illustrates the device as being divided into the receiving unit, the correction unit, and the output unit, these units exist independently for the left-eye and right-eye devices. As a matter of course, implementation in a single integrated form also falls within the scope of the present invention.

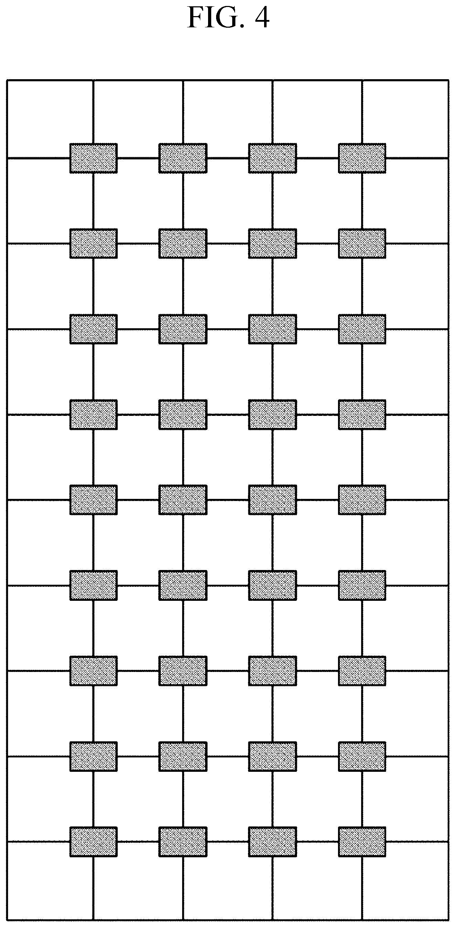

Further, FIG. 4 exemplarily illustrates a silicon semiconductor substrate including a driving circuit included in the HMD device shown in FIG. 1.

Unlike display panels in other products according to the prior art, the HMD device (including other types of VR devices) according to one embodiment of the present invention is designed such that a driving layer is formed on the silicon semiconductor substrate.

Furthermore, when the image correction is performed, the resolution for red pixels increases, while that for blue pixels decreases. Therefore, before outputting video data, a portion of the data for red pixels is removed, and the data for blue pixels are filled with black and transmitted to the driving layer to output the video data.

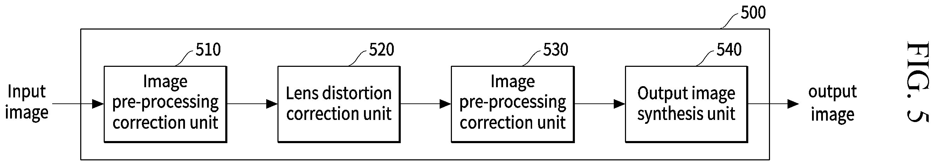

FIG. 5 is a block diagram of a device providing a VR (Virtual Reality) service according to one embodiment of the present invention. The embodiments described above with reference to FIGS. 1 to 4 may be referred to for supplementary interpretation of FIG. 5 and the following description.

In particular, since a product to which the present invention is applied allows a user to view image data through the lens 210 shown in FIG. 2, chromatic aberration occurs, and the present invention seeks to solve such chromatic aberration problems.

For example, as illustrated in FIG. 5, a device 500 for providing a VR (Virtual Reality) service includes an image pre-processing correction unit 510, a lens distortion correction unit 520, an image post-processing correction unit 530, and an output image synthesis unit 540.

In particular, the image pre-processing correction unit 510, the lens distortion correction unit 520, the image post-processing correction unit 530, and the output image synthesis unit 540 may be designed to be executed by a single controller, processor, AP, or the like, which also falls within the scope of the present invention.

Meanwhile, according to the prior art, chromatic aberration correction was performed by applying up-scaling or down-scaling based on lens distortion. However, due to differences between lens distortion parameter values and the scaling ratios/parameter values, there was a problem in that chromatic aberration still remained in an edge region of the image.

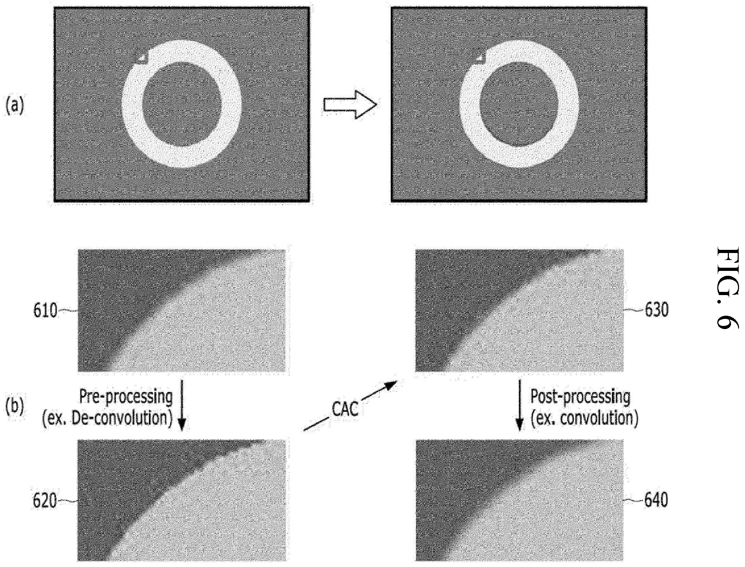

To solve this problem, unlike the prior art, the device according to one embodiment of the present invention is designed to add the image pre-processing correction unit 510 and the image post-processing correction unit 530. The specific functions of the image pre-processing correction unit 510 and the image post-processing correction unit 530 newly introduced in the present invention will be described in more detail below with reference to FIG. 6.

FIG. 6 illustrate a process in which pre-processing and post-processing are additionally performed in a CAC (Chromatic Aberration Correction) module according to one embodiment of the present invention.

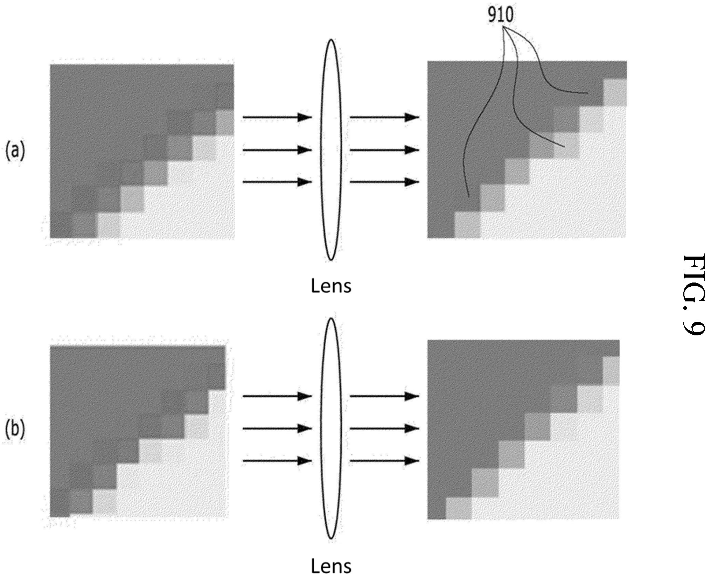

As illustrated in (a) of FIG. 6, for chromatic aberration correction, it is intentionally designed such that red or blue image data is included in an edge region of the image. Consequentially, in the image data passing through the lens, the chromatic aberration phenomenon is not visible to the user. Embodiments related thereto will be described in more detail below with reference to FIG. 9.

Meanwhile, in order to obtain the result for (a) of FIG. 6, as shown in (b) of FIG. 6, pre-processing is performed on the original image 610 to obtain image data 620. Scaling is then performed on the obtained image data 620, and finally, post-processing is performed on the scaled image data 630. Reference numeral 640 denotes image data for which the post-processing has been completed. In this case, the pre-processing is performed by the image pre-processing correction unit 510 described above with reference to FIG. 5, while the post-processing is performed by the image post-processing correction unit 530 described above with reference to FIG. 5.

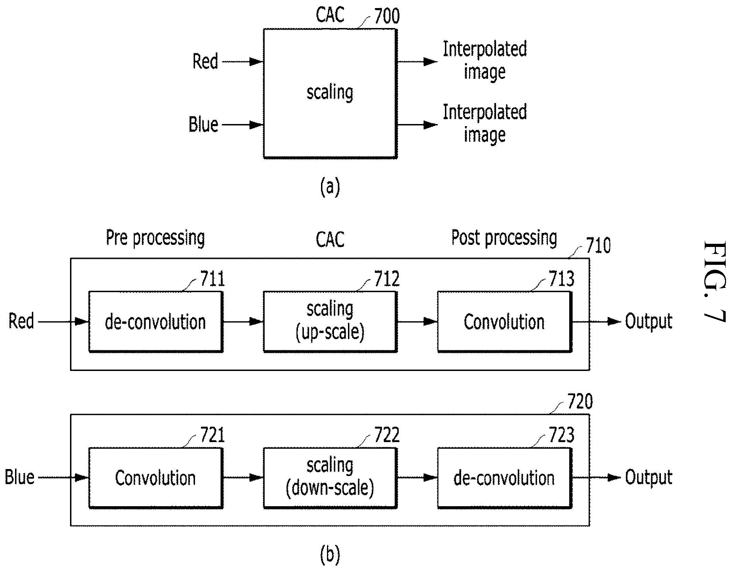

However, experimentally, when the same pre-processing and post-processing are simply performed on all pixel image data, the chromatic aberration problem is not completely resolved. To address this additional issue, chromatic aberration correction needs to be performed in different orders on a per-pixel basis. Embodiments related thereto will be described in more detail below with reference to FIG. 7.

FIG. 7 illustrate the overall process of CAC processing by comparing one embodiment of the present invention with a conventional technique.

First, the problems of chromatic aberration correction using the conventional technique will be described once again in a schematic manner.

As illustrated in (a) of FIG. 7, a CAC module 700 according to the prior art is designed to simply perform a scaling process. That is, for example, image data for red pixels and image data for blue pixels are up-scaled or down-scaled, and an interpolated image is output.

However, as described above, contrary to the theory, there is a problem in that the deformation does not occur uniformly in the edge region.

To address this issue, as illustrated in (b) of FIG. 7, according to one embodiment of the present invention, a pre-processing step is introduced before the scaling process, and a post-processing step is introduced after the scaling process. However, as briefly mentioned with reference to FIG. 6, it has been experimentally confirmed that the specific pre-processing and post-processing methods need to differ on a per-pixel basis (Red, Green, Blue, etc.).

For image data related to red pixels, an up-scaling process is required for chromatic aberration correction. In this case, since the edge region of the image becomes wider, it has been experimentally confirmed that de-convolution needs to be performed as pre-processing.

Accordingly, when processing image data related to red pixels, in a CAC module 710, a pre-processing unit 711 first performs de-convolution, then an up-scaling operation is performed, and finally a post-processing unit 713 performs convolution.

On the other hand, for image data related to blue pixels, a down-scaling process is required for chromatic aberration correction. In this case, since the edge region of the image becomes narrower, it has been experimentally confirmed that convolution needs to be performed as pre-processing and de-convolution needs to be performed as post-processing.

Accordingly, when processing image data related to blue pixels, in a CAC module 720, a pre-processing unit 721 first performs convolution, then a down-scaling operation is performed, and finally a post-processing unit 723 performs de-convolution.

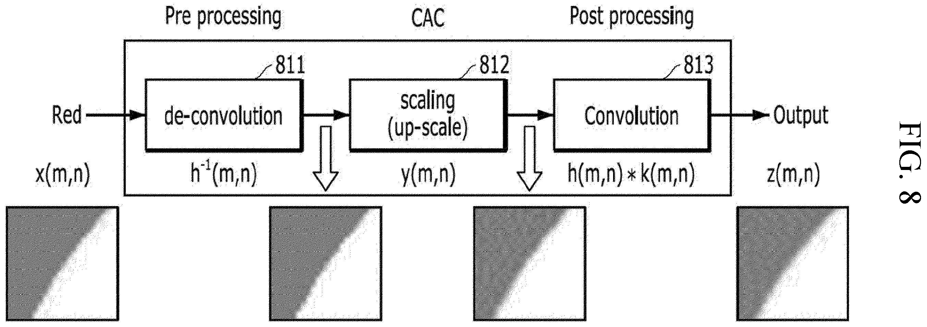

FIG. 8 illustrates a more detailed process for pre-processing and post-processing for red pixel data according to one embodiment of the present invention. While functions are included as examples, the present invention is not limited thereto, and it is apparent that the scope of the present invention should be determined according to the matters described in the claims.

According to the prior art, when an input value (input x) is input to the CAC module, an output value (output y) is generated as shown in (a) of FIG. 7.

On the other hand, according to one embodiment of the present invention which is introduced to solve the problem that region deformation is not uniform during the scaling process depending on pixel values of an image, when deformation occurs in the edge region of the image due to scaling, the edge region is arbitrarily pre-adjusted through pre-processing, a y value is obtained through scaling, and then the edge region that has been arbitrarily adjusted is readjusted in a post-processing process, thereby obtaining a z value.

In this process, since differences in refractive indices exist for each lens, post-processing is performed using a mask obtained by convolution of h and k. In particular, by adjusting variable k, which varies according to the refractive index of the lens (for example, through a multiplication operation), such that chromatic aberration is eliminated when the result for z is displayed on the lens, a technical effect is expected in that the present invention can be applied to any lens.

Meanwhile, FIG. 8 illustrates CAC for red pixels. As described above, in the case of image data for red pixels, the edge region of the image becomes wider during the up-scaling process.

Accordingly, a pre-processing unit 811 first performs de-convolution ***h*⁻¹**, a scaler 812 performs up-scaling, and finally, a post-processing unit 813 performs convolution ***h*k.***

On the other hand, in the case of image data for blue pixels, since the edge region of the image becomes narrower during the down-scaling process, convolution is performed through h as pre-processing, and de-convolution ***h*⁻¹**k*** is performed as post-processing.

h and k may be additionally adjusted as mask parameters according to characteristics of a lens used in a VR device such as HMD and according to a distance from the center, and a blur mask or the like may also be applied.

Meanwhile, a mask is designed as a rectangular or circular window that can cover an image, and performs a function of limiting a portion of the image to set a region.

FIG. 9 are diagrams for explaining video data of the edge region before and after passing through a lens, comparing one embodiment of the present invention with the conventional technique.

As illustrated in (a) of FIG. 9, according to the prior art, image data such as red pixel data is intentionally included in the edge region during chromatic aberration compensation. However, even after passing through the lens, the chromatic aberration phenomenon still remains (that is, for example, red pixel data 910 that are not included in the image appear in edge region).

In contrast, as illustrated in (b) of FIG. 9, according to one embodiment of the present invention, it can be seen that a technical effect is achieved in which, after passing through the lens during chromatic aberration compensation, red pixel data that is not included in the image does not appear at all in the edge region.

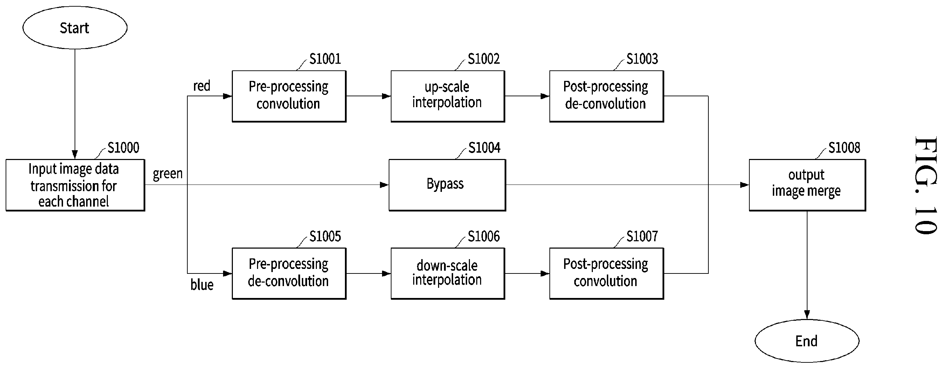

Further, FIG. 10 is a flow chart of a method for providing a VR (Virtual Reality) service according to another embodiment of the present invention.

First, as illustrated in FIG. 10, a device for providing a VR service according to another embodiment of the present invention receives input image data for each channel (S1000). Here, "image data for each channel" refers to red pixel data, green pixel data, blue pixel data, etc.

As described above, green pixel data is bypassed without undergoing any special CAC chromatic aberration compensation procedure (S1004).

On the other hand, for red pixel data, pre-processing (e.g., convolution) is first performed (S1001), followed by up-scaling (S1002), and finally post-processing (e.g., de-convolution) is performed (S1003).

Meanwhile, for blue pixel data, pre-processing (e.g., de-convolution) is first performed (S1005), followed by down-scaling (S1006), and finally post-processing (e.g., convolution) is performed (S1007).

Then, the VR service providing device according to one embodiment of the present invention outputs an image by synthesizing the respective RGB pixel data (S1008).

In summary, the above contents can be described as follows.

The device according to one embodiment of the present invention is designed to receive image data, perform chromatic aberration correction on the received image data in different orders for each pixel by referring to a memory before the image data is projected onto a lens, and then output the corrected image data.

The image data includes, for example, at least one of image data for red pixels, image data for green pixels, or image data for blue pixels.

Meanwhile, the above-described steps S1001 to S1007 may be designed to be performed only on an edge region of the image data.

Furthermore, the edge region includes, for example, a location where the RGB values change abruptly beyond a preset threshold.

Meanwhile, the present invention may also be applied to the HMD illustrated in (a) of FIG. 1.

The HMD illustrated in (a) FIG. 1 includes, externally, a strap that can be secured to a user's body, and internally includes at least one lens, a memory, and a controller.

In particular, the controller is designed to receive image data, perform chromatic aberration correction on the received image data in different orders for each pixel by referring to the memory before the image data is projected onto the at least one lens, and output the corrected image data. Furthermore, a supplementary interpretation of the HMD shown in (a) of FIG. 1 with reference to other drawings also falls within the scope of the present invention.

Furthermore, implementing only some of the internal components of the HMD shown in (a) of FIG. 1 without implementing the entire HMD also falls within the scope of the present invention.

For example, according to another embodiment of the present invention, a device for providing a VR (Virtual Reality) service includes a display and a controller.

In particular, the controller is configured to receive image data, perform chromatic aberration correction on the received image data in different orders for each pixel before the image data is projected onto a lens, and control the display to output the corrected image data.

Meanwhile, although the present specification illustratively describes VR, HMD, and the like, the present disclosure is applicable to any type of display devices that display images using lenses, and it is obvious that the scope of rights should be determined according to the matters described in the claims.

Those skilled in the art to which the present disclosure belongs will understand that the present disclosure described above can be implemented in other specific forms without changing its technical idea or essential features.

For example, the image processing device according to the present disclosure may be implemented in IC form with each component separately or with two or more components combined, and the functions of the image processing device may be implemented in program form and mounted within the IC. When the functions of the image processing device according to the present disclosure are implemented as a program, the function of each component included in the image processing device is implemented with specific code, and the codes for implementing a specific function may be implemented as a single program or may be divided and implemented as multiple programs.

Therefore, the embodiments described above should be understood as illustrative in all respects and not restrictive. The scope of the present disclosure is indicated by the claims set forth below rather than the detailed description above, and all changes or modified forms derived from the meaning and scope of the claims and their equivalent concepts should be construed as being included within the scope of the present disclosure.

## Claims

1. A control method for a display device for displaying an image using a lens, the method comprising:
receiving image data;
additionally performing per-pixel pre-processing and post-processing for chromatic aberration correction by referring to a memory on the image data before the image data is projected onto the lens; and
outputting the image data on which the pre-pixel pre-processing and post-processing have been additionally performed.

2. The control method for a display device for displaying an image using a lens of claim 1, wherein the performing further includes performing the chromatic aberration correction in different orders for each pixel.

3. The control method for a display device for displaying an image using a lens of claim 2, wherein the image data includes at least one of image data for red pixels, image data for green pixels, or image data for blue pixels.

4. The control method for a display device for displaying an image using a lens of claim 3, wherein the image data for green pixels is bypassed without correction.

5. The control method for a display device for displaying an image using a lens of claim 3, wherein for the image data for red pixels, the correction is performed in the order of pre-processing, up-scaling, and post-processing by referring to the memory.

6. The control method for a display device for displaying an image using a lens of claim 5, wherein the pre-processing corresponds to de-convolution, and the post-processing corresponds to convolution.

7. The control method for a display device for displaying an image using a lens of claim 3, wherein for the image data for blue pixels, the correction is performed in the order of pre-processing, down-scaling, and post-processing by referring to the memory.

8. The control method for a display device for displaying an image using a lens of claim 7, wherein the pre-processing corresponds to convolution, and the post-processing corresponds to de-convolution.

9. The control method for a display device for displaying an image using a lens of claim 2, wherein the correction is performed only on an edge region of the image data, and
the edge region includes a location where RGB values change abruptly beyond a preset threshold.

10. The control method for a display device for displaying an image using a lens of claim 9, further comprising:
performing a multiplication operation on a variable k that varies according to a refractive index of the lens during the post-processing of red pixels or blue pixels, before outputting the image data.

11. A head mounted display (HMD) device comprising:
a strap configured to be secured to a user's body;
at least one lens;
a memory; and
a controller,
wherein the controller is configured to:
receive image data;
additionally perform per-pixel pre-processing and post-processing for chromatic aberration correction by referring to the memory on the image data before the image data is projected onto the at least one lens; and
output the image data on which the per-pixel pre-processing and post-processing have been additionally performed.

12. A display device for displaying an image using a lens, the device comprising:
a display; and
a controller,
wherein the controller is configured to:
receive image data;
additionally perform per-pixel pre-processing and post-processing for chromatic aberration correction on the image data before the image data is projected onto the lens; and
control the display to output the corrected image data.

13. The display device for displaying an image using a lens of claim 12, wherein the controller performs the chromatic aberration correction in different orders for each pixel.

14. The display device for displaying an image using a lens of claim 13, wherein the image data includes at least one of image data for red pixels, image data for green pixels, or image data for blue pixels.

15. The display device for displaying an image using a lens of claim 13, wherein the image data for green pixels is bypassed without correction.

16. The display device for displaying an image using a lens of claim 13, wherein for the image data for red pixels, the correction is performed in the order of pre-processing, up-scaling, and post-processing by referring to a memory.

17. The display device for displaying an image using a lens of claim 16, wherein the pre-processing corresponds to de-convolution, and the post-processing corresponds to convolution.

18. The display device for displaying an image using a lens of claim 13, wherein for the image data for blue pixels, the correction is performed in the order of pre-processing, down-scaling, and post-processing by referring to a memory, and
the pre-processing corresponds to convolution, and the post-processing corresponds to de-convolution.

19. The display device for displaying an image using a lens of claim 13, wherein the controller controls such that correction is performed only on an edge region of the image data, and
the edge region includes a location where RGB values changes abruptly beyond a preset threshold.

20. The display device for displaying an image using a lens of claim 19, wherein, before outputting the image data, the controller performs a multiplication operation on a variable k that varies according to a refractive index of the lens during the post-processing of red pixels or blue pixels.
